# EUROPEAN PATENT APPLICATION

(11) **EP 3 753 642 A1**
(43) Date of publication of application: **23.12.2020**
(21) Application number: 20180263.4
(22) Date of filing: 16.06.2020
(51) Int. Cl.: B08B 9/047, B08B 9/043

(54) **CONDUIT CLEANER**

(30) Priority: 17.06.2019 US 201962862324 P
(71) Applicant: Sea to Sky Energy Solutions Corp., Squamish, British Columbia V8B 0T1 (CA)
(72) Inventor: MACDONALD, Sam, Squamish, British Columbia V8B 0T1 (CA); PACZEK, Lucas, Squamish, British Columbia V8B 0T1 (CA); ZELL, Graham, Squamish, British Columbia V8B 0T1 (CA); HALLIDAY, David, Squamish, British Columbia V8B 0T1 (CA); ZELL, Peter, Delta, British Columbia V4K 2T6 (CA); ROBINSON, Brett, Delta, British Columbia V4K 2T6 (CA); DE LA TORRE, Mauricio Rene Ponga, Vancouver, British Columbia V6T 1Z4 (CA); CAPARINI, Lucas Robert, Vancouver, British Columbia V6T 0T1 (CA); SZOKE, Simon, Squamish, British Columbia V8B 0T1 (CA)
(74) Representative: Dantz, Jan Henning

(57) **Abstract**

There is provided a conduit cleaner (30) including an elongate body (32). The conduit cleaner includes at least one vane (78, 80, 82, 84, 86, 88, 90, 92, 94) coupled to and extending radially outwards from a longitudinal axis (34) of the elongate body. The at least one vane has a distal end portion (98) shaped to abut against and clean an inner surface (100) of a conduit (36). According to a second aspect, there is provided a conduit cleaner (30) including an elongate body (32). The conduit cleaner includes a plurality of turbines (54, 58, 62) rotatably coupled to the elongate body. Each turbine includes at least one vane (78, 80, 82, 84, 86, 88, 92, 94) extending outwards from a longitudinal axis (34) of the elongate body. The vanes have distal end portions (98) shaped to abut against and clean an inner surface (100) of the conduit (36).

## Description

### BACKGROUND OF THE INVENTION

### Field of the Invention

There is provided a conduit cleaner. In particular, there is provided a penstock cleaner.

### Description of the Related Art

United States Patent No. 423,128 to Christoffel discloses a boiler-tube scraper in combination with a screw-rod, a first collar and a second collar. The first collar has pins held loosely on the screw-rod and the second collar screws on the screw-rod. The scraper includes a series of spiral blades having eyes held on the pins of the collars. The blades have serrated edges. Wire bands pass around the eyes of the spring-blades to hold the latter on the pins.

International Patent Application Publication No. WO 2000/063606 A1 to Bahari et al. discloses a vehicle for travel though a fluid-filled pipe, with the vehicle using power derived from the fluid flow to drive the vehicle. Certain embodiments have drive means capable of variable pitch in order to adjust the speed and direction of the vehicle in the pipe. Certain embodiments have drive means comprising a helical arm that can vary in pitch and diameter to accommodate different sizes of pipe and/or different rates of travel along the pipe.

International Patent Application Publication No. WO 2010/112808 A1 to Palmer discloses a cleaning apparatus comprising a generally cylindrical carrier. A radially outer portion of the carrier is provided with cleaning means. A radially inner portion of the carrier being provided with at least one set of turbine blades, in which the turbine blades are adjustable.

### BRIEF SUMMARY OF INVENTION

There is provided, and it is an object to provide, an improved conduit cleaner.

There is accordingly provided a conduit cleaner including an elongate body. The cleaner includes at least one vane coupled to and extending radially outwards from a longitudinal axis of the elongate body. The at least one vane has a distal end portion shaped to abut against and clean an inner surface of a conduit.

According to a second aspect, there is provided a conduit cleaner including an elongate body. The cleaner includes a plurality of turbines rotatably coupled to the elongate body. Each turbine includes at least one vane extending outwards from a longitudinal axis of the elongate body. The vanes have distal end portions shaped to abut against and clean an inner surface of the conduit.

According to a third aspect, there is provided a conduit cleaner including an elongate body. The cleaner includes at least one flexible member having a proximal end portion coupled to the elongate body. The at least one flexible member has a distal end portion shaped to abut against and clean an inner surface of the conduit. The at least one flexible member is arc-shaped in a direction extending from the proximal end portion thereof to the distal end portion thereof.

According to a fourth aspect, there is provided a conduit cleaner. The cleaner include a hollow body having an inlet positioned to receive fluid from a conduit in a direction parallel with a longitudinal axis of the hollow body. The cleaner includes at least one hollow arm coupled to and in fluid communication with said hollow body. The at least one hollow arm has at least one outlet extending therethrough. The at least one outlet is positioned to discharge said fluid in a direction perpendicular to the longitudinal axis of the hollow body. This causes rotation of the at least one hollow arm about the longitudinal axis thereby. The at least one hollow arm has a distal end portion shaped to abut an inner surface of the conduit.

According to a fifth aspect, there is provided a conduit cleaner including a hollow body having a longitudinal axis. The hollow body has a proximal end portion and an inlet adjacent to the proximal end portion. The inlet is positioned to receive fluid from a conduit in a direction parallel with said longitudinal axis. The hollow body has a distal end portion spaced-apart from the proximal end portion and the longitudinal axis. The hollow body has an outlet positioned to discharge said fluid in a direction perpendicular to the longitudinal axis of the hollow body.

According to a sixth aspect, there is provided a conduit cleaner including an elongate body. The cleaner includes at least one flexible arc-shaped member having a first end coupled to the body and a second end that is slidable relative to the body. The cleaner includes a cleaning portion between the ends of the arc-shaped member and which selectively abuts an inner surface of the conduit. The cleaner includes a turbine coupled to the second end of the arc-shaped member and which is slidable relative to the body.

According to a seventh aspect, there is provided a conduit cleaner including an elongate body. The cleaner includes a first subassembly of flexible arc-shaped members, each having a first end coupled to the body and a second end that is slidable relative to the body. The cleaner includes a second subassembly of flexible arc-shaped members, each having a first end coupled to the second ends of the first subassembly and a second end that is slidable relative to the body. The cleaner includes a biasing member coupled to the second end of the second subassembly. The biasing member is shaped to bias the second end of the second subassembly towards the first end of the second subassembly and to bias the second end of the first subassembly towards the first end of the first subassembly.

### BRIEF DESCRIPTION OF DRAWINGS

The invention will be more readily understood from the following description of preferred embodiments thereof given, by way of example only, with reference to the accompanying drawings, in which:
Figure 1 is a distal end elevation view of a conduit cleaner according to a first aspect, the conduit cleaner being shown positioned within the interior of a conduit and a distal end portion of the body of the conduit cleaner being removed;
Figure 2 is a top plan view thereof;
Figure 3 is a top plan view of the conduit cleaner of Figure 1, with the body, bearings and turbines thereof shown partially in fragment;
Figure 4 is a sectional end elevation view taken along lines 4 - 4 of Figure 5 of a conduit cleaner according to a second aspect, the conduit cleaner being shown positioned within the interior of a conduit and a distal end portion of the body of the conduit cleaner being removed;
Figure 5 is a top plan view thereof, with the body, bearings and turbines of the conduit cleaner shown partially in fragment;
Figure 6 is an exploded top plan view of subsections of the elongate body of the conduit cleaner shown in fragment and in the process of threadably coupling together;
Figure 7 is a top plan view of the subsections of the elongate body of the conduit cleaner of Figure 6 shown in fragment and coupled together, as well as bearings of the conduit cleaner coupled to the subsections;
Figure 8 is a top plan exploded view of a distal end portion of one of the vanes of the turbines of the conduit cleaner of Figure 5, together with cleaning members of the conduit cleaner in the process of being threadably coupled to the distal end portion;
Figure 9 is a top plan view a conduit cleaner according to a third aspect, the conduit cleaner being shown positioned within the interior of a conduit;
Figure 10 is an end elevation view of a conduit cleaner according to a fourth aspect, the conduit cleaner being shown positioned within the interior of a conduit;
Figure 11 is a top plan view thereof;
Figure 12 is a top plan view of a conduit cleaner according to a fifth aspect, the conduit cleaner being shown positioned within the interior of a conduit and being shown in an extended position; and
Figure 13 is a top plan view thereof, with the conduit cleaner being shown in a retracted position.

### DESCRIPTION OF THE PREFERRED EMBODIMENTS

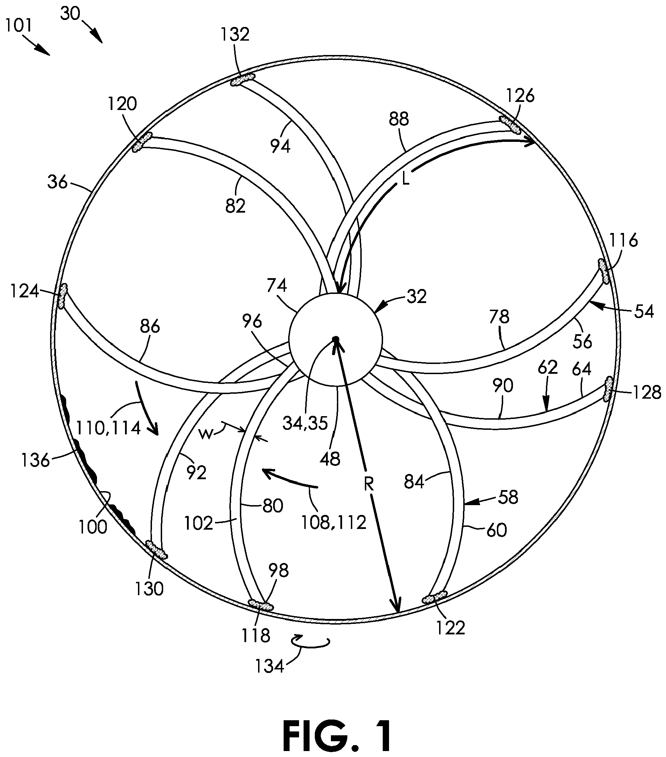

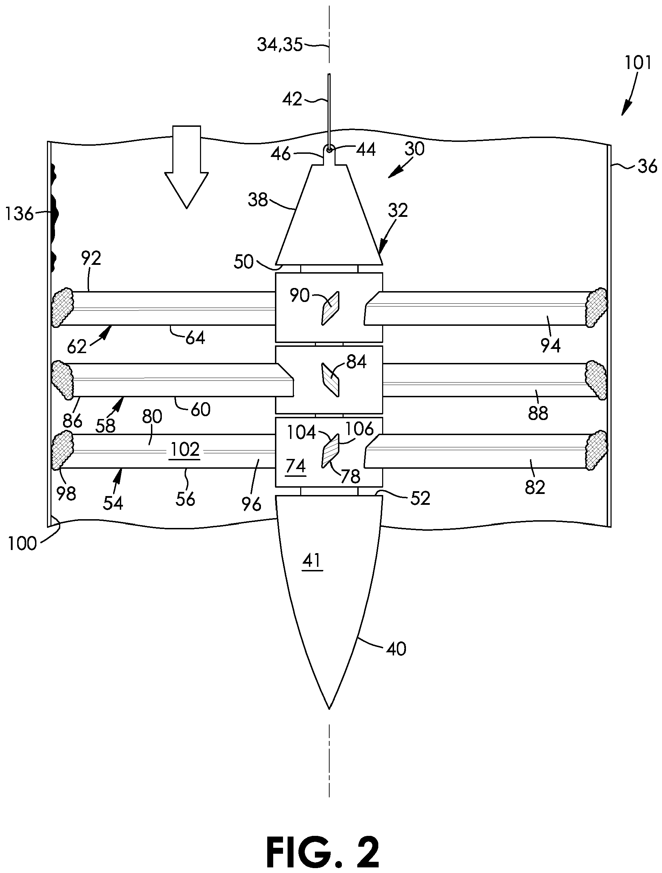

Referring to the drawings and first to Figure 1, there is shown a conduit cleaner, in this example a penstock cleaner 30. As seen in Figure 2, the cleaner includes an elongate body 32 having a longitudinal axis 34. The cleaner 30 is positionable within a conduit, in this example penstock 36. The penstock has a longitudinal axis 35 and, in operation, the longitudinal axis 34 of the elongate body is generally co-axial with the longitudinal axis of the penstock.

The elongate body 32 has a first or proximal end portion 38 and a second or distal end portion 40 spaced-apart from the proximal end portion thereof. The proximal end portion of the body 32 tapers in a direction extending from the distal end portion of the body towards the proximal end portion of the body. The distal end portion 40 of the body tapers in a direction extending from the proximal end portion 38 of the body towards the distal end portion of the body. The end portions of the elongate body are generally conical in shape in this example: the proximal end portion thereof has a generally frustoconical shape and the distal end portion thereof is generally conical with an outwardly convex outer surface 41.

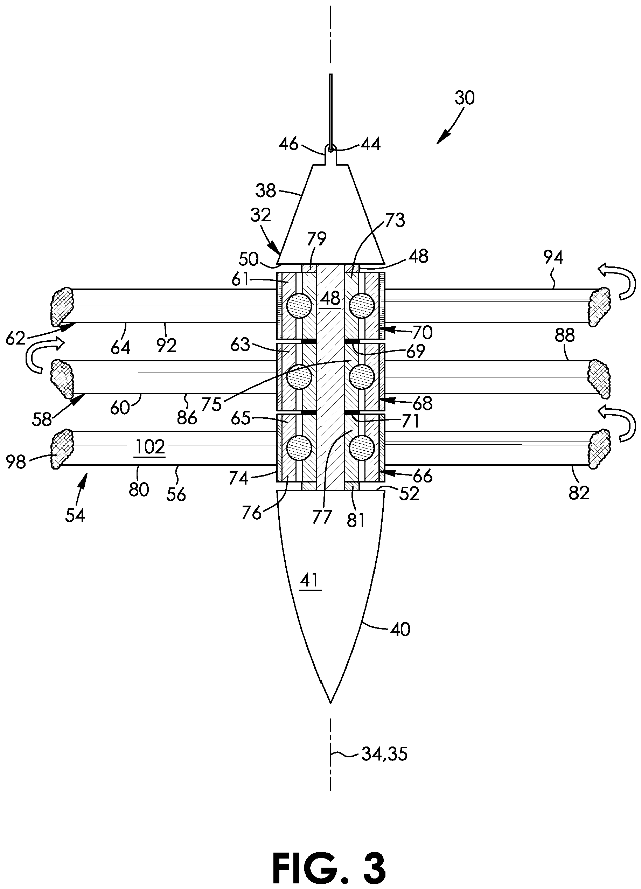

The cleaner 30 includes a line, in this example a tether 42 to which the body 32 rotatably couples via proximal end portion 38. In this example, the tether extends through an aperture 44 of a tab 46 of the proximal end portion of the body. As seen in Figure 3, the body 32 includes a central portion, in this example a shaft 48 which couples to and extends between the proximal end portion 38 and distal end portion 40 thereof. The shaft and end portions of the body are integrally connected together and form a unitary whole in this example; however this is not strictly required and the shaft and end portions may be separate parts which connect together in other embodiments. The body 32 has a first annular shoulder 50 which extends between and is adjacent to the shaft 48 and proximal end portion 38 of the body 32 in this example. The body has a second annular shoulder 52 which extends between and is adjacent to the shaft and distal end portion 40 of the body in this example.

As seen in Figure 2, the cleaner 30 includes a plurality of turbines, in this example a first turbine 54 including a rotor 56, a second turbine 58 including a rotor 60 and a third turbine 62 including a rotor 64. Referring back to Figure 3, the rotors rotatably couple to the body 32 via adjacent bearings, in this example outer races 61, 63 and 65 of radial bearings 66, 68 and 70. Sleeves 69 and 71 are positioned between inner races 73, 75 and 77 of bearings 66, 68, 70 in this case. The inner races press fit to shaft 48. The bearings 66, 68 and 70 are positioned along the shaft so as to have clearance and thus freedom of movement between adjacent said bearings and clearance from adjacent shoulders 50 and 52. In this case sleeve 79 is positioned between inner race 73 and proximal end portion 38 of the body 32, and sleeve 81 is positioned between inner race 77 and distal end portion 41 of the body.

Each rotor 56 includes a hub 74 to which the corresponding outer race 61 of its bearing couples, in this example via press fit connection.

As seen in Figure 2, each rotor includes a plurality of flexible members, in this example vanes extending outwards from the longitudinal axis 34 of the body 32: rotor 56 includes vanes 78, 80 and 82; rotor 60 includes vanes 84, 86 and 88; and rotor 64 includes vanes 90, 92 and 94. However, this number of vanes is not strictly required and other combinations may be provided in other embodiments. The vanes couple to and extend radially outwards from the elongate body 32. As seen in Figure 1, each vane 80 includes a proximal end portion 96 adjacent to the body 32 of the cleaner 30 and hub 74 of its rotor 56. Each vane includes a distal end portion 98 spaced-apart from the body of the cleaner and its hub. Each vane 80 has a middle portion 102 between the proximal end portion 96 thereof and the distal end portion 98 thereof. The proximal end portion, distal end portion and middle portion of each vane have a substantially constant width W in this embodiment.

As seen in Figure 2, each vane 78 has an airfoil shape in cross section in this example, with first planar or side surface 104 and second planar or side surface 106 thereof being outwardly convex in this example. Referring to Figure 1, each vane 88 is resilient and has a length L equal to or greater than the radius R of the penstock 36 in this example. The distance between the distal end portion 98 of the vane and the longitudinal axis 34 of the elongate body is greater than the radius of the penstock in this example. Referring to Figure 2, each vane 88 is flexible and rotatable about the longitudinal axis 34 of body 32 via its corresponding bearings 66. Each vane is shaped to bias the distal end portion 98 thereof against the inner surface 100 of the penstock 36. The distal end portions of the vanes are thus shaped to abut against and clean in part the inner surface of the penstock.

As seen in Figure 1, each vane 80 in use is arc-shaped in lateral cross-section in this example. Each vane is arc-shaped in a direction extending from the proximal end portion 96 thereof to the distal end portion 98 thereof. The vanes 78, 80, 82 of the first turbine 54 and vanes 90, 92 and 94 of the third turbine 62 are arc-shaped in a direction opposite to the vanes 84, 86 and 88 of the second turbine 58. The vanes of the first and third turbines are outwardly convex in a first direction of rotation 108 and outwardly concave in a second direction of rotation 110. The vanes 84, 86 and 88 of the second turbine 58 are outwardly concave in the first direction of rotation 108 and outwardly convex in the second direction of rotation 110 in this example.

As seen in Figure 2, rotors 56 and 64 are shaped to rotate in a first rotational direction 112 about the longitudinal axis 34 of the body 32 of the cleaner 30 and about longitudinal axis 35 of the penstock 36. Rotor 60, positioned between rotors 56 and 64, is shaped to rotate in a second rotational direction 114 opposite the first rotational direction.

As seen in Figure 1, the cleaner 30 includes a plurality of cleaning members 116, 118, 120, 122, 124, 126, 128, 130 and 132. The cleaning members are selectively connectable to respective distal end portions 98 of the vanes 78, 80, 82, 84, 86, 88, 90, 92 and 94. In this example each cleaning member comprises a series of bristles. However, this is not strictly required and the cleaning member may take other forms in other embodiments, such as in the form of scrubbers for example. Each of the cleaning members 116, 118, 120, 122, 124, 126, 128, 130 and 132 selectively couples to and is removable from the distal end portion 98 of its respective vane in this example.

The turbines 54, 58 and 62 in this example are configured to power the cleaning members to selectively rotate relative to their vanes, as shown by arrow of numeral 134 for vane 80. Turbines and rotors are known per se, and thus their various parts, operation and the like, will not be described in further detail.

The turbines enable the cleaner to gradually move along the penstock. The penstock cleaner 30 so shaped and configured functions to selectively and gradually remove algae 136, scaling, debris and the like from the inner surface 100 of the penstock, while a hydropower plant 101 is in operation. The cleaner 30 as herein described may thus provide an advantage avoiding shutdowns of the plant for penstock cleaning. Also, the gradual removable of algae and the like may function to inhibit the detrimental effects to downstream wildlife that may otherwise occur from rapid removal of algae, debris and the like.

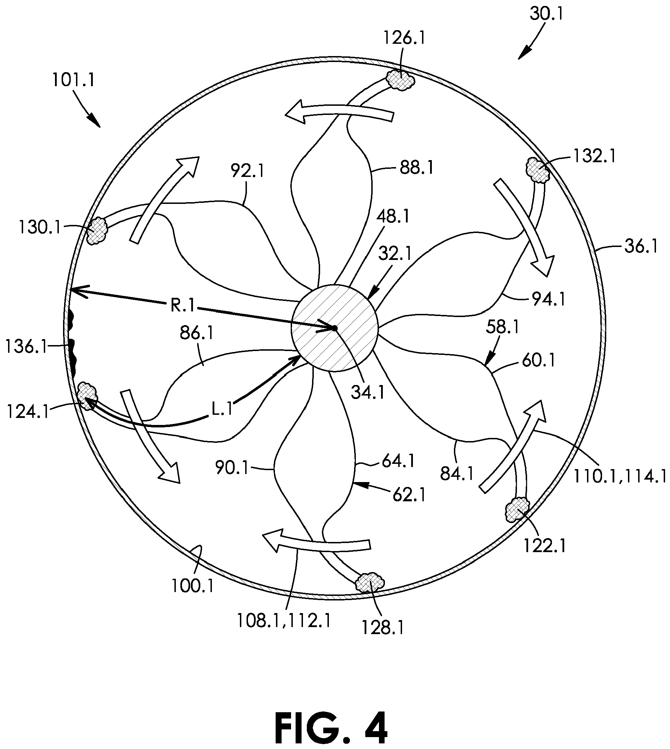

Figures 4 to 8 show a penstock cleaner 30.1 according to a second embodiment. Like parts have like numbers and functionings as the embodiment shown in Figures 1 to 3 with the addition of ".1". Cleaner 30.1 substantially the same as cleaner 30 shown in Figures 1 to 3 with the following exceptions.

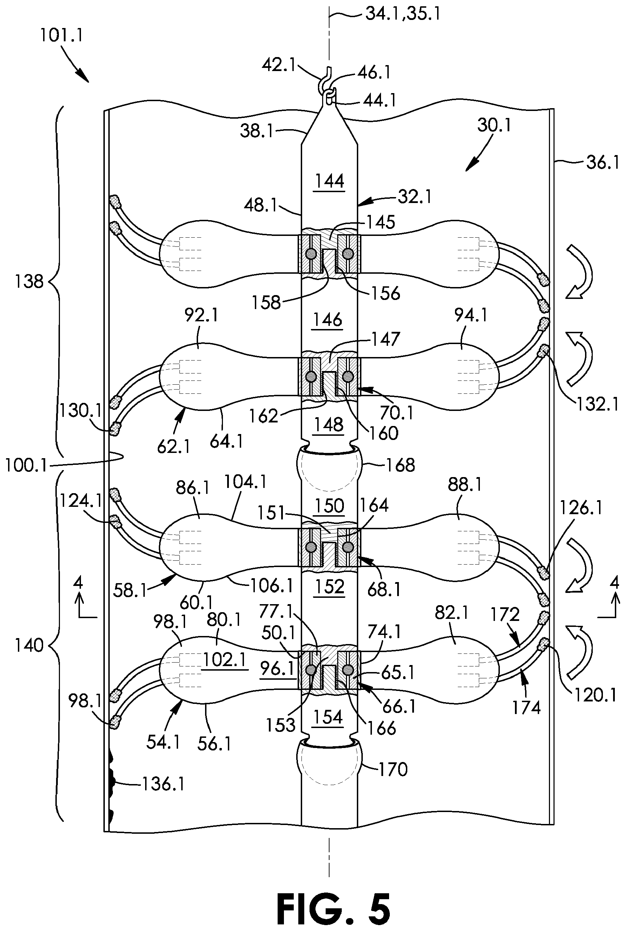

As seen in Figure 5, the elongate body 32.1 of the cleaner 30.1 comprises a plurality of adjacent body subassemblies 138, 140 and 142. Each body subassembly comprises a plurality of elongate subsections. This is shown by body subassembly 138 having subsections 144, 146 and 148 and body subassembly 140 having subsections 150, 152 and 154. The subsections threadably couple together: a male threaded member, in this example threaded shaft 156 of subsection 146 threadably engages with a female threaded member, in this example threaded bore 158 of subsection 144; and a male threaded member, in this example threaded shaft 160 of subsection 148 threadably engages with a female threaded member, in this example threaded bore 162 of subsection 146.

Each body subassembly 140 in this example includes a pair of longitudinally spaced-apart annular grooves 164 and 166 shaped to receive respective bearings 66.1 and 68.1 thereof. Bearings 66.1 are positioned between subsections 152 and 154 and bearings 68.1 are positioned between subsections 150 and 152. Subsections 144, 146, 150 and 152 include elongate end portions, in this example shafts 145, 147, 149, 151 and 153 within which threaded bores 158 extend. The inner races 77.1 of the respective bearings 66.1 press fit to said shafts in this example, with the outer races 65.1 of the bearings remaining adjacent to but clear of adjacent subsections 152 and 154 of the body subassembly 140 of the bearings.

Adjacent ones of the body subassemblies rotatably couple together in this example. This is shown by subassemblies 138 and 140 rotatably coupling together via a ball-and-socket joint 168 and subassemblies 140 and 142 rotatably coupling together via ball-and-socket joint 170. However this is not strictly required and the subassemblies may rotatably couple together in other manners in other embodiments.

Still referring to Figure 5, the middle portion 102.1 of each vane 80.1 is enlarged in this example relative to the proximal end portion 96.1 and distal end portion 98.1 of the vane. The middle portion of each vane 86.1 has a pair of opposite planar surfaces 104.1 and 106.1 which are outwardly convex in this example. The distal end portion 98.1 of each vane 80.1 is outwardly convex in shape in this example.

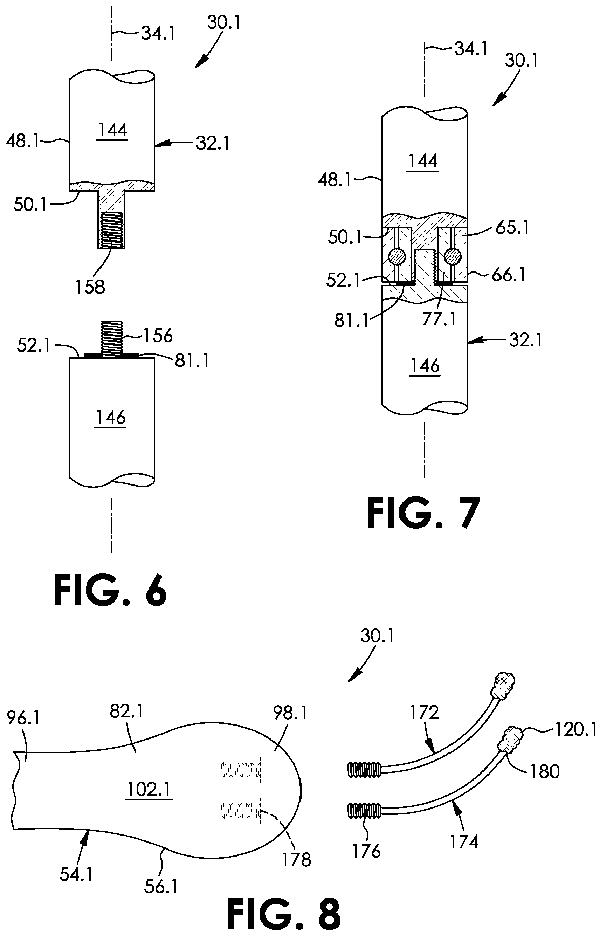

As seen in Figure 8, cleaner 30.1 includes a plurality of elongate mounting members, in this example flexibles rods, with a pair of said flexible rods 172 and 174 per vane 82.1. The rods are arc-shaped in operation in this example. Each rod 174 has a first or proximal end portion 176 that is threaded in this example and which threadably couples to a corresponding threaded bore 178 located adjacent to the distal end portion 98.1 of its vane. Each rod 174 has a second or distal end portion 180 to which a cleaning member 120.1 selectively and removably couples. Thus, each cleaning member of cleaner 30.1 couples to the distal end portion 98.1 of its vane 82.1 via an arc-shaped rod in this embodiment.

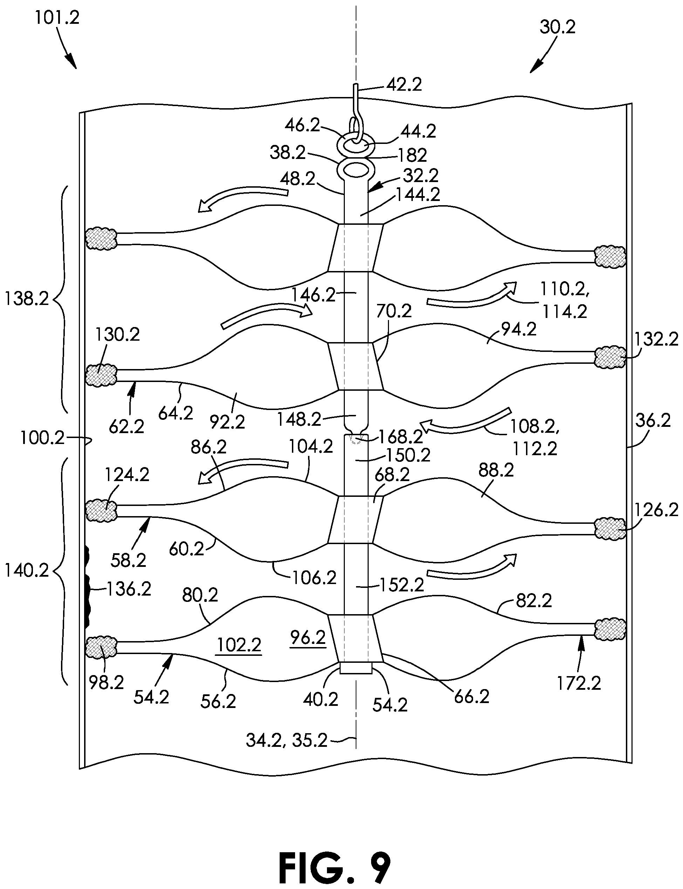

Figure 9 shows a penstock cleaner 30.2 according to a third embodiment. Like parts have like numbers and functionings as the embodiment shown in Figures 4 to 8 with the replacement of decimal extension ".1" with decimal extension ".2" and with the addition of decimal extension ".2" for numbers not previously having decimal extensions. Cleaner 30.2 is substantially the same as cleaner 30.1 shown in Figures 4 to 8 with the following exceptions.

There is just a single rod 172.2 per vane 82.2, with each rod being straight in top plan view. Each rod is also integrally connected to and formed with its corresponding vane in this example. The elongate body 32.2 further couples to tether 42.2 via a rotating swivel 182 in this example.

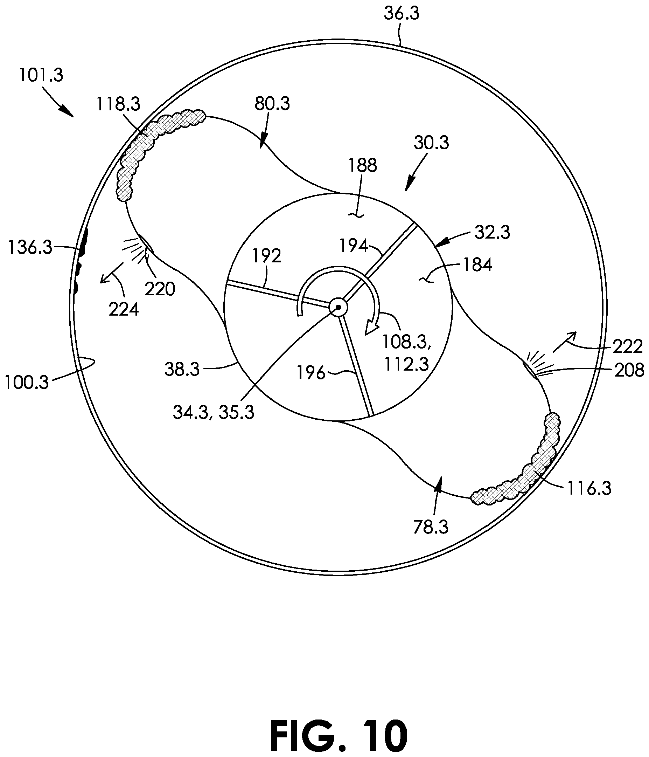

Figures 10 to 11 show a penstock cleaner 30.3 according to a fourth embodiment. Like parts have like numbers and functionings as the embodiment shown in Figures 1 to 3 with the addition of ".3". Cleaner 30.3 is similar to cleaner 30 shown in Figures 1 to 3 with the following exceptions.

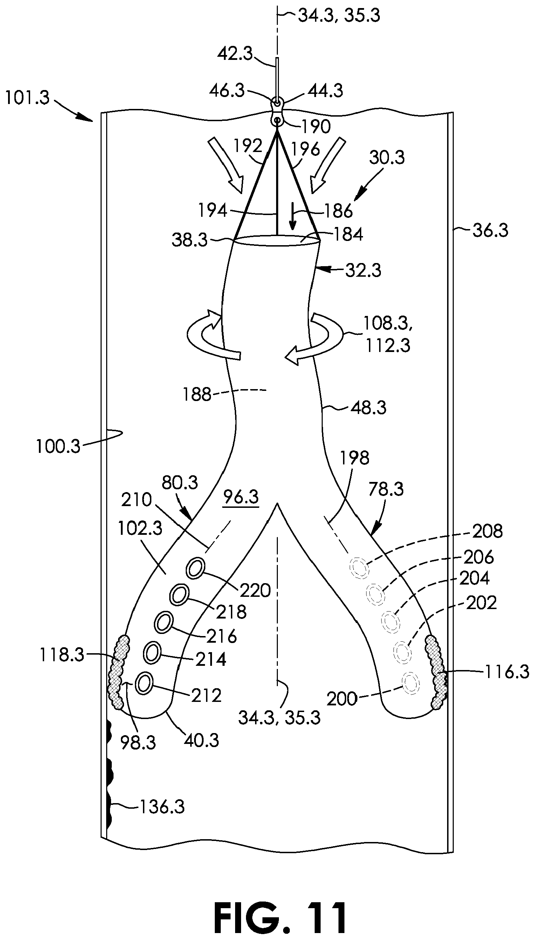

In this embodiment and referring to Figure 11, the elongate body 32.3 of the penstock cleaner 30.3 is hollow, flexible and Y-shaped in this example. The body has an inlet 184 adjacent to the proximal end portion 38.3 thereof. The inlet is positioned to receive fluid 186 within the penstock 36.3 in a direction which is generally parallel with the longitudinal axis 35.3 of the penstock and longitudinal axis 34.3 of elongate body 32.3. The elongate body has an interior 188 in fluid communication with the inlet 184 thereof. A plurality of cables 192, 194 and 196 couple to and extend from the elongate body 32.3. A swivel 190 couples the cables and tether 42.3 together. The cables 192, 194 and 196 extend between and couple the swivel to the hollow body 32.2 adjacent to the inlet 184 thereof in this example.

Still referring to Figure 11, the penstock cleaner 30.3 including a plurality of flexible members, in this example hollow arms 78.3 and 80.3 coupled to and in fluid communication with the hollow body 32.3; however, two arms per se are not strictly required and there may be one arm or three or more arms in other embodiments. The hollow arms are integrally connected together and form a unitary whole with the hollow body, and may thus be said to comprise parts of the hollow body. The body 32.3 and arms 78.3 and 80.3 are made of a flexible material, in this example canvas; however, this is not strictly required and the body may be made of other materials in other examples.

Each arm 80.3 has a distal end portion 98.3 shaped to abut the inner surface 100.3 of the penstock 36.3. The distal end portions of the hollow arms may be said to comprise the distal end portions of the hollow body. The penstock cleaner 30.3 includes cleaning members 116.3 and 118.3 coupled to the distal end portions of the hollow arms.

Arm 78.3 has a longitudinal axis 198 and a plurality of longitudinally spaced-apart outlets 200, 202, 204, 206, and 208 extending therethrough along the longitudinal axis thereof. Arm 80.3 has a longitudinal axis 210 and a plurality of longitudinally spaced-apart outlets 212, 214, 215, 218 and 220 extending therethrough along the longitudinal axis thereof. Outlets 200 and 212 are adjacent to respective distal end portions 98.3 of the arms.

As seen in Figure 10, the outlets 208 and 220 of the arms 78.3 and 80.3 are positioned to discharge fluid passing through the body 32.3 in directions 222 and 224 perpendicular to the longitudinal axis 34.3 of the body 32.3 and perpendicular to the longitudinal axis 35.3 of the penstock 36.3. This causes rotation of the arms 78.3 and 80.3 about longitudinal axes 34.3 and 35.3 in rotational direction 112.3. In this example, arm 78.3 is shaped to allow passage of fluid therethrough in a first direction 222 and arm 80.3 is shaped to allow passage of fluid therethrough in a second direction 224 which is opposite the first direction. However, the first and second directions need not be opposite each other.

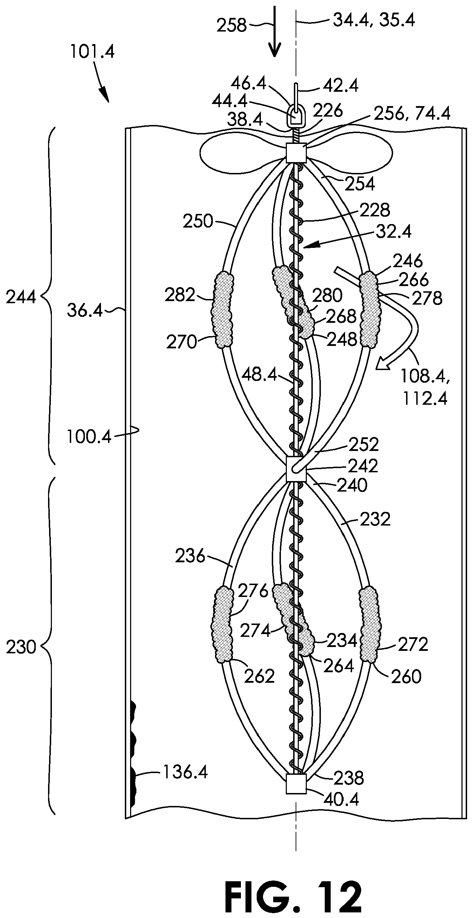

Figures 12 to 13 show a penstock cleaner 30.4 according to a fifth embodiment. Like parts have like numbers and functionings as the embodiment shown in Figures 1 to 3 with the addition of ".4". Cleaner 30.4 is similar to cleaner 30 shown in Figures 1 to 3 with the following exceptions.

The body 32.4 of cleaner 30.4 is flexible and comprises a flexible shaft 226 about which a resilient member, in this example a coil spring 228 extends.

The cleaner includes a first subassembly 230 of flexible arc-shaped members 232, 234 and 236. Members 232 and 236 are arc-shaped and member 234 is arc-shaped as well as helical in this example; however, this is not strictly required. The arc-shaped members have first or proximal ends 238 coupled to the body 32.4 adjacent to distal end portion 40.4 thereof. The cleaner 30.4 includes a first hub or collar 242 which extends about and is slidable relative to the body 32.4. The arc-shaped members 232, 234 and 234 have second or distal ends 240 coupled to the first collar. The arc-shaped members have intermediate portions 260, 262, and 264 between the proximal ends 238 thereof and the distal ends 240 thereof.

The cleaner 30.4 includes a second subassembly 244 of flexible arc-shaped members 246, 248 and 250. Members 246 and 250 are arc-shaped and member 248 is arc-shaped as well as helical in this example; however, this is not strictly required. The arc-shaped members have first or proximal ends 251, 252 and 253 coupled to collar 242. The cleaner 30.4 includes a second hub or collar 256 which extends about and is slidable relative to the body 32.4. The arc-shaped members 246, 248 and 250 have second or distal ends 254, 255 and 257 that couple to the second collar. Collar 242 is positioned between the arc-shaped members 232, 234 and 236 and arc-shaped members 246, 248 and 250 in this example. The arc-shaped members have intermediate portions 266, 268 and 270 between the proximal ends 251, 252 and 253 thereof and the distal ends 254, 255 and 257 thereof.

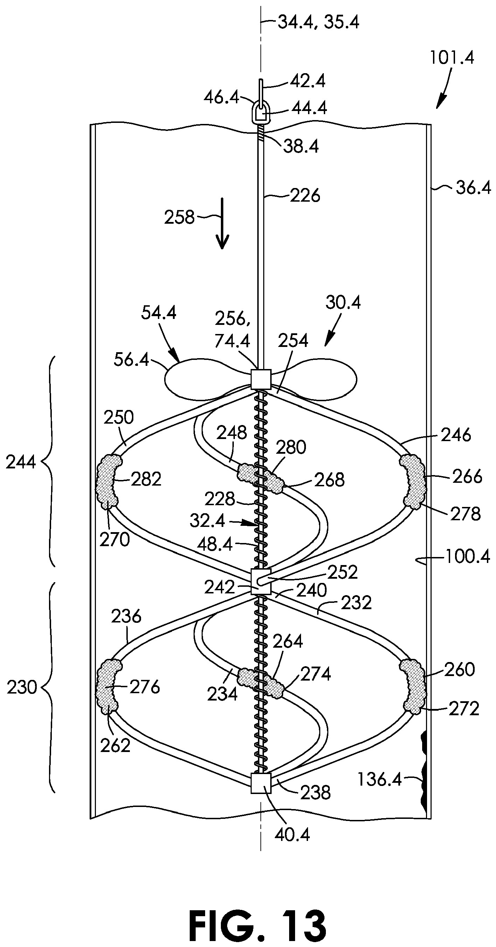

Cleaner 30.4 has an extended position seen in Figure 12 and a retracted position seen in Figure 13. Collar 256 is adjacent to the proximal end portion 38.4 of the body 32.4 when the cleaner is in its extended position seen Figure 12.

As seen in Figure 12, the arc-shaped members 232, 234, 236, 246, 248 and 250 of the subassemblies 230 and 244 when viewed as a whole may be said to comprise a plurality of helical members, with sliding collar 242 forming two arc-shaped subsections of the helical members.

The penstock cleaner 30.4 includes a biasing member, in this example turbine 54.4. Hub 74.4 of the rotor 56.4 of the turbine and collar 256 in this example coincide and may be said to comprise a continuous and integrated whole. The hub of the rotor is coupled to the distal ends 254 of the arc-shaped members 246, 248 and 250 and is slidable relative to the body 32.4. As seen in Figure 12, the rotor 56.4 is shaped such that fluid 258 passing through the penstock 36.4 presses thereon, causing the rotor to retract spring 228 and bias the distal ends 254 of the arc-shaped members 246, 248 and 250 of the second subassembly 244 to move towards collar 242. The rotor also biases the distal ends 240 of the arc-shaped members 232, 234 and 236 of the first subassembly 230 to move towards the ends 238 of the arc-shaped members of the first subassembly, as seen in Figure 13.

Still referring to Figure 13, the arc-shaped members 232, 234, 236, 246, 248 and 250 include a plurality of cleaning members 272, 274, 276, 278, 280 and 282 selectively connectable to intermediate portions 260, 262, 264, 266, 268 and 270 of the arc-shaped members. Fluid 258 passing through the penstock 36.4 causes the turbine 54.4 to bias the distal ends 254, 255 and 257 of arc-shaped members 246, 248 and 250 towards the distal ends 240 of arc-shaped members 232, 234 and 236, until intermediate portions 260, 262, 264, 266, 268 and 270 of the arc-shaped members are adjacent to the inner surface 100.4 of the penstock 36.4 and the cleaning members coupled thereto abut the inner surface of the penstock. The fluid passing through the penstock also causes the turbine 54.4 and thus the arc-shaped members to rotate.

The cleaners as herein described may be made at least in part of a dissolvable material according to one embodiment. However this is not strictly required and the cleaners may be made of undissolvable materials in other examples.

It will be appreciated that many variations are possible within the scope of the invention described herein. Some of the sediment displacement members described herein may be referred to as plows or scoop members.

### ADDITIONAL DESCRIPTION

Examples of penstock systems have been described. The following clauses are offered as further description.
(1) A conduit cleaner comprising: an elongate body having a longitudinal axis and positionable within a conduit; and at least one vane coupled to and extending radially outwards from the elongate body, the at least one vane having a distal end portion shaped to abut against and clean an inner surface of the conduit.
(2) The cleaner of clause 1, further including one or more cleaning members selectively connectable to the distal end portion of the at least one vane.
(3) The cleaner of clause 2 characterized in that each said cleaning member comprises a series of bristles.
(4) The cleaner of clause 2 characterized in that each said cleaning member comprises a scrubber.
(5) The cleaner of any one of clauses 2 to 4 characterized in that each said cleaning member threadably couples to the distal end portion of the at least one vane.
(6) The cleaner of any one of clauses 2 to 5 characterized in that the cleaning member couples to the distal end portion of the at least one vane via an elongate member.
(7) The cleaner of clause 6 characterized in that the elongate member is an arc-shaped rod.
(8) The cleaner of clause 2 characterized in that the cleaning member includes a pair of elongate members threadably connectable to the distal end portion of the at least one vane and includes scrubbing members coupled to distal ends of the elongate members.
(9) A conduit cleaner comprising: an elongate body having a longitudinal axis and positionable within a conduit; and a plurality of turbines rotatably coupled to the elongate body, each said turbine including at least one vane extending outwards from the longitudinal axis of the elongate body, the vanes having distal end portions shaped to abut against and clean an inner surface of the conduit.
(10) The cleaner of any one of clauses 1 to 9 characterized in that each said vane is resilient.
(11) The cleaner of any one of clauses 1 to 10 characterized in that each said vane has a length which is greater than that of a radius of the conduit.
(12) The cleaner of any one of clauses 1 to 11 characterized in that each said vane is shaped to bias the distal end portion thereof against the inner surface of the conduit.
(13) The cleaner of any one of clauses 1 to 12 characterized in that each said vane in use is arc-shaped in lateral cross-section.
(14) The cleaner of any one of clauses 1 to 13 characterized in that each said vane is arc-shaped in a direction extending from a proximal end portion thereof adjacent to the body to the distal end portion thereof.
(15) The cleaner of any one of clauses 1 to 13 characterized in that each said vane has a proximal end portion adjacent to the body, and a middle portion between the proximal end portion thereof and the distal end portion thereof.
(16) The cleaner of clause 15, characterized in that each said intermediate portion is enlarged relative to the proximal end portion thereof and the distal end portion thereof, and each said intermediate portion has a pair of opposite planar surfaces which are outwardly convex.
(17) The cleaner of any one of clauses 1 to 16 characterized in that each said distal end portion is outwardly convex in shape.
(18) The cleaner of any one of clauses 1 to 17 characterized in that each said vane is flexible.
(19) The cleaner of any one of clauses 1 to 18, characterized in that each said vane is rotatable about the longitudinal axis of the elongate body.
(20) The cleaner of clause 9 characterized in that first and third ones of the turbines are shaped to rotate in a first rotational direction about the longitudinal axis and a second one of the turbines, positioned between the first and third ones of the turbines, is shaped to rotate in a second rotational direction opposite the first rotational direction.
(21) The cleaner of clause 9 characterized in that the turbines couple to the body via bearings.
(22) The cleaner of clause 9 characterized in that each said vane couples to a subsection of said elongate body and characterized in that at least a pair of said subsections are threadably coupled together.
(23) The cleaner of clause 9 characterized in that the vanes are arc-shaped in a direction extending from a proximal end portion thereof adjacent to the body to the distal end portion thereof, with the vanes of first and third said turbines being arc-shaped in a direction opposite to that of a second said turbine.
(24) The cleaner of clause 20 characterized in that the vanes of the first and third ones of said turbines are outwardly convex in a first direction of rotation and outwardly concave in a second direction of rotation, and characterized in that the at least one vane of the second one of said turbines is outwardly concave in the first direction of rotation and outwardly convex in the second direction of rotation.
(25) A conduit cleaner comprising: an elongate body positionable within a conduit; and at least one flexible member having a proximal end portion coupled to the elongate body and having a distal end portion shaped to abut against and clean an inner surface of the conduit, the at least one flexible member being arc-shaped in a direction extending from the proximal end portion thereof to the distal end portion thereof.
(26) The cleaner of any one of clauses 1 to 25 characterized in that the elongate body has first and second end portions, the first end portion tapering in a direction extending along the longitudinal axis towards the second end portion, and the second end portion tapering in a direction extending along the longitudinal axis towards the first portion.
(27) The cleaner of clause 26 characterized in that the end portions of the elongate body are conical in shape.
(28) The cleaner of any one of clauses 1 to 27 characterized in that the elongate body comprises two or more adjacent segments which rotatably couple together.
(29) The cleaner of clause 28 characterized in that each pair of adjacent said segments of the elongate body rotatably couple together via a ball-and-socket joint.
(30) A conduit cleaner comprising: a hollow body having an inlet positioned to receive fluid from a conduit in a direction parallel with a longitudinal axis of the conduit; at least one hollow arm coupled to and in fluid communication with said hollow body, the at least one hollow arm having at least one outlet extending therethrough, the at least one outlet being positioned to discharge said fluid in a direction perpendicular to the longitudinal axis of the conduit and causing rotation of the at least one hollow arm about the longitudinal axis thereby, and the at least one hollow arm having a distal end portion shaped to abutting an inner surface of the conduit.
(31) The cleaner of clause 30, further including one or more cleaning members selectively connectable to the distal end portion of the at least one hollow arm.
(32) The cleaner of clause 31 characterized in that each said cleaning member comprises a series of bristles.
(33) The cleaner of clause 31 characterized in that each said cleaning member comprises a scrubber.
(34) The cleaner of any one of clauses 30 to 33, characterized in that the body and the arm are flexible.
(35) The cleaner of any one of clauses 30 to 34, characterized in that the body and the arm are made of canvas.
(36) The cleaner of any one of clauses 30 to 35, characterized in that the body and the arm comprises a continuous and integrated whole.
(37) The cleaner of any one of clauses 30 to 36, further including a second hollow arm coupled to and in fluid communication with the hollow body, the second hollow arm having at least one outlet extending therethrough, the at least one outlet of the second hollow arm being positioned to discharge a portion of said fluid in a direction perpendicular to the longitudinal axis of the conduit and further promoting rotation of the hollow arms about the longitudinal axis thereby, and the second hollow arm having a distal end portion shaped to abut the inner surface of the conduit.
(38) The cleaner of clause 37 characterized in that the at least one outlet of a first said hollow arm is shaped to allow passage of fluid therethrough in a first direction and characterized in that the at least one outlet of a second said hollow arm is shaped to allow passage of fluid therethrough in a second direction which is opposite the first direction.
(39) The cleaner of any one of clauses 30 to 38 characterized in that the cleaner is Y-shaped.
(40) The cleaner of any one of clauses 30 to 39 characterized in that each said hollow arm has a longitudinal axis and a plurality of spaced-apart said outlets extending along the longitudinal axis thereof.
(41) The cleaner of any one of clauses 30 to 40 further including a tether to which the hollow body is rotatably coupled.
(42) The cleaner of clause 41 characterized in that the hollow body couples to the tether via a swivel coupled to the tether and one or more cables which extend between and couple the swivel to the hollow body adjacent to the inlet thereof.
(43) A conduit cleaner comprising: a hollow body having a longitudinal axis, a proximal end portion, an inlet adjacent to the proximal end portion, the inlet being positioned to receive fluid from a conduit in a direction parallel with said longitudinal axis, a distal end portion spaced-apart from the proximal end portion and the longitudinal axis, and an outlet, the outlet being positioned to discharge said fluid in a direction perpendicular to the longitudinal axis of the hollow body.
(44) The cleaner of clause 43 further including a cleaning member coupled to the distal end portion of the hollow body.
(45) A conduit cleaner comprising: an elongate body; at least one flexible arc-shaped member having a first end coupled to the body and a second end that is slidable relative to the body; and a turbine coupled to the second end of the arc-shaped member and slidable relative to the body.
(46) The cleaner of clause 45 characterized in that fluid passing through a conduit causes the turbine and thus the arc-shaped member to rotate.
(47) The cleaner of any one of clauses 45 to 46 characterized in that fluid passing through the conduit causes the turbine to bias the second end of the arc-shaped member towards the first end of the arc-shaped member, with portions of the arc-shaped member between the first end thereof and the second thereof abutting an inner surface of the conduit thereby.
(48) The cleaner of any one of clauses 45 to 47 further including a sliding collar positioned between the first end of the arc-shaped member and the second end of the arc-shaped member, the sliding collar coupling to and forming two arc-shaped subsections of the arc-shaped member.
(49) A conduit cleaner comprising: an elongate body; a first subassembly of flexible arc-shaped members each having a first end coupled to the body and a second end that is slidable relative to the body; a second subassembly of flexible arc-shaped members each having a first end coupled to the second ends of the first subassembly and a second end that is slidable relative to the body; and a biasing member coupled to the second end of the second subassembly, the biasing member being shaped to bias the second end of the second subassembly towards the first end of the second subassembly and to bias the second end of the first subassembly towards the first end of the first subassembly.
(50) The cleaner of any one of clauses 45 to 49 further including one or more cleaning members selectively connectable to the arc-shaped member.
(51) The cleaner of clause 50 characterized in that each said cleaning member comprises a series of bristles.
(52) The cleaner of clause 50 characterized in that each said cleaning member comprises a scrubber.
(53) The cleaner of any one of clauses 45 to 52 characterized in that the body is flexible.
(54) The cleaner of clause 53 characterized in that the body is a flexible shaft.
(55) The cleaner of any one of clauses 45 to 54 further including a tether to which the body is pivotally coupled.
(56) The cleaner of any one of clauses 1 to 55 characterized in that the cleaner is made at least in part of a dissolvable material

It will be understood by someone skilled in the art that many of the details provided above are by way of example only and are not intended to limit the scope of the invention which is to be determined with reference to at least the following claims.

## Claims

1. A conduit cleaner (30, 30.1, 30.2, 30.3; 30.4) comprising an elongate body (32; 32.1; 32.2; 32.3; 32.4) and at least one vane (78, 80, 82, 84, 86, 88, 90, 92, 94; 78.1, 80.1, 82.1, 84.1, 86.1, 88.1, 90.1, 92.1, 94.1; 78.2, 80.2, 82.2, 84.2, 86.2, 88.2, 90.2, 92.2, 94.2; 78.3, 80.3) coupled to and extending radially outwards from a longitudinal axis (34; 34.1; 34.2; 34.3; 34.4) of the elongate body, **characterized in that** the at least one vane has a distal end portion (98; 98.1; 98.2; 98.3) shaped to abut against and clean an inner surface (100; 100.1; 100.2; 100.3; 100.4) of a conduit (36; 36.1; 36.2; 36.3; 36.4).

2. The conduit cleaner (30, 30.1, 30.2, 30.4) as claimed in claim 1 **characterized in that** the at least one vane (78, 80, 82, 84, 86, 88, 90, 92, 94; 78.1, 80.1, 82.1, 84.1, 86.1, 88.1, 90.1, 92.1, 94.1; 78.2, 80.2, 82.2, 84.2, 86.2, 88.2, 90.2, 92.2, 94.2) is flexible has a proximal end portion (96; 96.1; 96.2; 96.3; 96.4) coupled to the elongate body (32; 32.1; 32.2; 32.4), and is arc-shaped in a direction extending from the proximal end portion thereof to the distal end portion (98; 98.1; 98.2) thereof.

3. The conduit cleaner (30, 30.1, 30.2) of any preceding claim **characterized in that** the at least one vane (78, 80, 82, 84, 86, 88, 90, 92, 94; 78.1, 80.1, 82.1, 84.1, 86.1, 88.1, 90.1, 92.1, 94.1; 78.2, 80.2, 82.2, 84.2, 86.2, 88.2, 90.2, 92.2, 94.2) is resilient and shaped to bias the distal end portion (98; 98.1; 98.2) thereof against the inner surface (100; 100.1; 100.2) of the conduit (36; 36.1; 36.2).

4. The conduit cleaner of any preceding claim (30, 30.1, 30.2, 30.4) **characterized in that** the conduit cleaner further includes one or more turbines (54, 58, 62; 54.1, 58.1, 62.1; 54.2, 58.2, 62.2; 54.4); rotatably coupled to the elongate body (32; 32.1; 32.2; 32.4), each said turbine including said at least one vane (78, 80, 82, 84, 86, 88, 90, 92, 94; 78.1, 80.1, 82.1, 84.1, 86.1, 88.1, 90.1, 92.1, 94.1; 78.2, 80.2, 82.2, 84.2, 86.2, 88.2, 90.2, 92.2, 94.2) extending outwards from the longitudinal axis of the elongate body.

5. The conduit cleaner (30; 30.1; 30.2) of claim 4 **characterized in that** the vanes (78, 80, 82, 90, 92, 94; 78.1, 80.1, 82.1, 90.1, 92.1, 94.1; 78.2, 80.2, 82.2, 90.2, 92.2, 94.2) of the first and third ones of said turbines (54, 62; 54.1, 62.1; 54.2, 62.2) are outwardly convex in a first direction of rotation (108; 108.1; 108.2) and outwardly concave in a second direction of rotation (110; 110.1; 110.2), and **characterized in that** the at least one vane (84, 86, 88; 84.1, 86.1, 88.1; 84.2, 86.2, 88.2) of the second one of said turbines (58; 58.1; 58.2) is outwardly concave in the first direction of rotation and outwardly convex in the second direction of rotation.

6. The conduit cleaner (30, 30.1, 30.2) as claimed in any one of claims 1 to 3, **characterized in that** the conduit cleaner further includes a first subassembly of vanes (78, 80, 82, 90, 92, 94; 78.1, 80.1, 82.1, 90.1, 92.1, 94.1; 78.2, 80.2, 82.2, 90.2, 92.2, 94.2) shaped to rotate in a first rotational direction (108; 108.1; 108.2) about the longitudinal axis (34; 34.1; 34.2), and **characterized in that** the conduit cleaner further includes a second subassembly of vanes (84, 86, 88; 84.1, 86.1, 88.1; 84.2, 86.2, 88.2) shaped to rotate in a second rotational direction (110; 110.1; 110.2) opposite the first rotational direction.

7. The conduit cleaner (30.2) of any preceding claim, **characterized in that** each said vane (78.2, 80.2, 82.2, 84.2, 86.2, 88.2, 90.2, 92.2, 94.2) has a proximal end portion (96; 96.1; 96.2) adjacent to the body, and a middle portion (102.1; 102.2) between the proximal end portion thereof and the distal end portion (98.2) thereof, each said middle portion being enlarged relative to the proximal end portion thereof and the distal end portion thereof.

8. The conduit cleaner (30, 30.1, 30.2, 30.3; 30.4) as claimed in any preceding claim further including one or more cleaning members (116, 118, 120, 122, 124, 126, 128, 130 and 132; 120.1, 122.1, 124.1, 126.1, 128.1, 130.1, 132.1; 124.2, 126.2, 128.2, 130.2, 132.2; 116.3, 118.3; 272, 274, 276, 278, 280 and 282); coupled to the distal end portion (98; 98.1; 98.2; 98.3) of the at least one vane (78, 80, 82, 84, 86, 88, 90, 92, 94; 78.1, 80.1, 82.1, 84.1, 86.1, 88.1, 90.1, 92.1, 94.1; 78.2, 80.2, 82.2, 84.2, 86.2, 88.2, 90.2, 92.2, 94.2; 78.3, 80.3), the one or more cleaning members being shaped to selectively clean the inner surface (100; 100.1; 100.2; 100.3; 100.4) of the conduit (36; 36.1; 36.2; 36.3; 36.4).

9. The conduit cleaner (30, 30.1, 30.2, 30.3; 30.4) as claimed in claim 8 **characterized in that** the one or more cleaning members (116, 118, 120, 122, 124, 126, 128, 130 and 132; 120.1, 122.1, 124.1, 126.1, 128.1, 130.1, 132.1; 124.2, 126.2, 128.2, 130.2, 132.2; 116.3, 118.3; 272, 274, 276, 278, 280 and 282) comprises one of bristles and a scrubber.

10. The conduit cleaner (30.3) as claimed in claim 1, **characterized in that** the elongate body (32.3) is hollow and has an inlet (184), the inlet being positioned to receive fluid in a direction (186) parallel with said longitudinal axis (34.3); and **characterized in that** the conduit cleaner further includes at least one outlet (200, 202, 204, 206, 208, 212, 214, 216, 218, 220) spaced-apart from and in fluid communication with the inlet of the hollow body, the outlet being positioned to discharge said fluid in a direction (222, 224) perpendicular to the longitudinal axis of the hollow body

11. The conduit cleaner (30.3) as claimed in claim 10, **characterized in that** said at least one vane comprises at least one hollow arm (78.3; 80.3) coupled to and in fluid communication with said hollow body, the at least one hollow arm having said at least one outlet (200, 202, 204, 206, 208, 212, 214, 216, 218, 220) extending therethrough and being configured such that discharging of said fluid from said at least one outlet causes rotation of the at least one hollow arm about the longitudinal axis (34.3) thereby.

12. The conduit cleaner (30.3) as claimed in claim 10 further including at least one hollow arm (78.3; 80.3) in fluid communication with the hollow body (32.3) and via which the fluid discharges, the at least one hollow arm has a longitudinal axis (198, 210) and a plurality of spaced-apart said outlets (200, 202, 204, 206, 208, 212, 214, 216, 218, 220) extending along the longitudinal axis thereof.

13. The conduit cleaner (30.3) as claimed in claim 10 further including a pair of hollow arms (78.3; 80.3) in fluid communication with the hollow body and through which the fluid discharges, **characterized in that** at least one outlet (200, 202, 204, 206, 208) of a first said hollow arm is shaped to allow passage of fluid therethrough in a first direction (222) and **characterized in that** at least one outlet (212, 214, 216, 218, 220) of a second said hollow arm is shaped to allow passage of fluid therethrough in a second direction (224) which is opposite the first direction.

14. The conduit cleaner (30.4) as claimed in claim 1, **characterized in that** the conduit cleaner includes a first subassembly (230) of flexible arc-shaped members (232, 234, 236) each having a first end (238) coupled to the body (32.4) and a second end (240) that is slidable relative to the body, **characterized in that** the conduit cleaner includes a second subassembly (244) of flexible arc-shaped members (246, 248, 250) each having a first end (252) coupled to the second ends of the first subassembly and a second end (254) that is slidable relative to the body, and **characterized in that** the conduit cleaner includes a biasing member (54.4) coupled to the second ends of the arc-shaped members of the second subassembly, the biasing member being shaped to bias the second ends of the arc-shaped members of the second subassembly towards the first ends of the arc-shaped members of the second subassembly and being shaped to bias the second ends of the arc-shaped members of the first subassembly towards the first ends of the arc-shaped members of the first subassembly.

15. The conduit cleaner (30, 30.1, 30.2, 30.3; 30.4) of any preceding claim, **characterized in that** the conduit cleaner is made at least in part of a dissolvable material
